# EUROPÄISCHE PATENTSCHRIFT

(11) **EP 3 551 900 B1**
(45) Veröffentlichungstag und Bekanntmachung des Hinweises auf die Patenterteilung: **25.08.2021**
(21) Anmeldenummer: 17790677.3
(22) Anmeldetag: 25.10.2017
(51) Int. Cl.: F16D 13/56, F16D 13/64, F16D 13/68

(54) **LAMELLENKUPPLUNG FÜR EIN KRAFTFAHRZEUG**
MULTI-PLATE CLUTCH FOR A MOTOR VEHICLE
EMBRAYAGE MULTIDISQUES POUR UN VÉHICULE À MOTEUR

(30) Priorität: 09.12.2016 DE 102016014723
(43) Veröffentlichungstag der Anmeldung: 16.10.2019
(73) Patentinhaber: Daimler AG, 70372 Stuttgart (DE)
(72) Erfinder: HEUKELBACH, Kai, 73257 Köngen (DE); ZEHREN, Felix, 70327 Stuttgart-Wangen (DE); ZIEGLER, Bernhard, 73098 Rechberghausen (DE); SCHUSTER, Tobias, 73733 Esslingen (DE); RUBE, Lukas, 70372 Stuttgart (DE); KOPPITZ, Bernd, 73650 Winterbach (DE); VELTHAUS, Jan, 70327 Stuttgart (DE)
(74) Vertreter: JENSEN & SON
(86) Internationale Anmeldenummer: PCT/EP2017/001254
(87) Internationale Veröffentlichungsnummer: WO 2018/103874

(56) Entgegenhaltungen:
- EP-A2- 0 190 571
- DE-A1-102008 006 155
- DE-C1- 3 320 977

## Beschreibung

Die Erfindung betrifft eine Lamellenkupplung für ein Kraftfahrzeug und einen Hybrid-Triebkopf mit einer Lamellenkupplung.

Aus der AT 157623 B ist eine Lamellenkupplung für ein Kraftfahrzeug bekannt, bei welcher zumindest ein Teil der Lamellen über axial verformbare elastische Distanzelemente auf Distanz gehalten werden. Die elastischen Distanzelemente sind dabei insbesondere im eingebauten Zustand axial verformbar, so dass die Distanz der Lamellen beim Öffnen der Lamellenkupplung durch die elastischen Distanzelemente vergrößert wird. Bei einem Schließen der Lamellenkupplung lassen sich die elastischen Distanzelemente komprimieren, wodurch die Distanz der Lamellen beim Schließen verringert werden kann.

Aus der DE 33 20 977 C1 und der EP 0 190 571 A2 sind ebenfalls ähnliche Lamellenkupplungen bekannt.

Aus der gattungsgemäßen DE 10 2008 006 155 A1 ist bereits eine Lamellenkupplung für ein Kraftfahrzeug bekannt, mit einem Innenlamellenträger, mit einem Außenlamellenträger und mit zumindest einem fest an dem Innenlamellenträger oder an dem Außenlamellenträger angebundenen Lamellenpaket, welches zumindest zwei Lamellen umfasst. Die Lamellen sind insbesondere von Stahllamellen mit federnden Stegen zur Reduzierung von Schleppverlusten gebildet.

Bei einer einfachen Einspannung der Lamellen bleibt die Geometrie der beteiligten Bauteile mitsamt ihrer Toleranzen unberücksichtigt. Hierdurch kann es bei der Einspannung dazu kommen, dass unter der Pressung des Spannmittels, z.B. eines Schraubenkopfs, eine ungleichförmige Spannungsverteilung in der Steggeometrie hervorgerufen wird, die in der Folge eine Deformation der Lamelle bewirkt und damit die Funktionstüchtigkeit der Lamellenkupplung negativ beeinflusst.

Der Erfindung liegt insbesondere die Aufgabe zugrunde, eine besonders zuverlässige und leicht zu montierende Lamellenkupplung, insbesondere bei einteilig ausgeführten steggebundenen Lammellenkupplungen, bereitzustellen. Sie wird durch eine erfindungsgemäße Ausgestaltung entsprechend dem Anspruch 1 gelöst. Weiterbildungen der Erfindung ergeben sich aus den abhängigen Ansprüchen.

Die Erfindung geht aus von einer Lamellenkupplung für ein Kraftfahrzeug, mit einem Innenlamellenträger, mit einem Außenlamellenträger und mit zumindest einem fest an dem Innenlamellenträger oder an dem Außenlamellenträger angebundenen Lamellenpaket, welches zumindest zwei Lamellen umfasst.

Das Lamellenpaket ist dabei sowohl in einer Umfangsrichtung als auch in einer axialen Richtung fest an dem Lamellenträger angebunden. Mit der axial festen Anbindung ist gemeint, dass die axial fest angebundenen Lamellen des Lamellenpaketes in einem Bereich der Anbindung, einem Anbindungsbereich, axial unbeweglich fixiert sind. In dem Bereich der Anbindung haben die axial fest angebundenen Lamellen sowohl in einem geöffneten Zustand der Lamellenkupplung als auch in einem geschlossenen Zustand der Lamellenkupplung axial die gleiche Position.

Vorteilhaft sind die Lamellen in dem Anbindungsbereich durch Schrauben oder ähnliches axial eingeklemmt. Der Anbindungsbereich kann somit auch als Klemmbereich bezeichnet werden.

Dabei weisen die Lamellen neben dem Anbindungsbereich einen Reibbereich auf. Die Lamellen sind derart ausgebildet, dass der Reibbereich in der axialen Richtung beweglich ist. Dadurch bewegen sich die Reibbereiche der Lamellen beim Schließen der Lamellenkupplung aufeinander zu, und sie bewegen sich beim Öffnen der Lamellenkupplung voneinander weg.

Der Reibbereich und der Anbindungsbereich einer der zumindest zwei Lamellen sind dabei vorteilhaft durch federnde Stege miteinander verbunden. Ein federnder Steg einer Lamelle ermöglicht eine axiale Verschiebung des zugehörigen Reibbereiches gegenüber dem zugehörigen Anbindungsbereich der Lamelle.

Es wird weiter davon ausgegangen, dass die Lamellenkupplung zumindest ein als Zwischenblech ausgebildetes, zwischen den zumindest zwei Lamellen axial im Wesentlichen unbeweglich und unverformbar angeordnetes Distanzelement aufweist, welches zu einer gleichmäßigen Beabstandung der Lamellen vorgesehen ist.

Bei dem Distanzelement handelt es sich somit um ein im Wesentlichen in einem eingebauten Zustand axial starres Element, das in dem eingebauten Zustand in axialer Richtung weder beweglich noch verformbar ist. Das Distanzelement hat die Aufgabe, die zumindest zwei Lamellen in dem Anbindungsbereich starr auf Distanz zu halten. Das erfindungsgemäße Distanzelement unterscheidet sich somit von anderen bekannten Distanzelementen, die in eingebautem Zustand axial verformbar sind und die Lamellen auf eine federnde Art und Weise auf Distanz halten.

Die zumindest zwei Lamellen des Lamellenpakets der Lamellenkupplung sind insbesondere von Stahllamellen gebildet. Vorzugsweise ist das Distanzelement insbesondere zur Vergleichmäßigung der Spannung und gezielten Spannungseinleitung vorgesehen, damit die Lamellen nicht durch die Spannung verformt werden. Bevorzugt weist die Lamellenkupplung zumindest zwei Distanzelemente auf, welche zu einer beidseitigen Einspannung der Lamellen zwischen den gepaarten Distanzelementen vorgesehen sind. Vorzugsweise ist das Distanzelement eben ausgebildet. Dadurch kann insbesondere eine vorteilhaft zuverlässige und insbesondere leicht zu montierende Lamellenkupplung bereitgestellt werden. Es kann insbesondere gewährleistet werden, dass bei der Einspannung der Lamellen eine homogene Pressungsverteilung erzielt wird und damit die Planparallelität der Lamellen zueinander gesichert ist. Hierdurch kann ein definiertes Lüftspiel gewährleistet werden. Vorzugsweise kann dadurch insbesondere vermieden werden, dass sich Teile der Lamellen, insbesondere federnde Stege der Lamellen, bei der Einspannung verformen. Durch eine Verformung würde das Schleppmoment der Lamellenkupplung steigen, da durch die Deformation das Lüftspiel der Lamellen zueinander unzulässig reduziert würde. Bei einer geöffneten Lamellenkupplung und damit hohen Differenzdrehzahlen, würde durch die unzulässige Anlage der Lamellen zueinander ein hoher Wärmeeintrag an den Reiblamellen erfolgen, der in der Folge zu einer Schädigung der Lamellen führen könnte. Demnach kann eine Beschädigung der Lamellenkupplung vermieden und ein zuverlässiger Betrieb ermöglicht werden. Unter einem "Innenlamellenträger" soll insbesondere ein Bauteil der Lamellenkupplung verstanden werden, das dazu vorgesehen ist, zumindest eine Lamelle, insbesondere zumindest eine Innenlamelle, des Lamellenpakets der Lamellenkupplung drehfest bzw. in der Umfangsrichtung fest zu lagern. Vorzugsweise soll darunter insbesondere ein Bauteil verstanden werden, das dazu vorgesehen ist, radial innenliegende Lamellen des Lamellenpakets der Lamellenkupplung drehfest zu lagern und/oder aufzunehmen. Bevorzugt ist der Innenlamellenträger insbesondere von einer Nabe gebildet. Der Innenlamellenträger ist insbesondere von einer Nabe eines Wandlerdeckels einer Drehmomentwandlervorrichtung eines Hybrid-Triebkopfs gebildet. Unter einem "Außenlamellenträger" soll insbesondere ein Bauteil der Lamellenkupplung verstanden werden, das dazu vorgesehen ist, zumindest eine Lamelle, insbesondere zumindest eine Außenlamelle, des zweiten Lamellenpakets der Lamellenkupplung drehfest zu lagern. Vorzugsweise soll darunter insbesondere ein Bauteil verstanden werden, das dazu vorgesehen ist, radial außenliegende Lamellen der Lamellenkupplung drehfest zu lagern und/oder aufzunehmen. Bevorzugt ist der Außenlamellenträger insbesondere von einem Korb, welcher drehfest mit einem Turbinenrad der Drehmomentwandlervorrichtung des Hybrid-Triebkopfs verbunden ist, gebildet. Ferner soll in diesem Zusammenhang unter einem "Distanzelement" insbesondere ein Element verstanden werden, das zu einer Anordnung in axialer Richtung, insbesondere relativ zu einer Rotationsachse des Lamellenpakets, zwischen den zumindest zwei Lamellen des Lamellenpakets vorgesehen ist. Vorzugsweise soll darunter insbesondere ein Element verstanden werden, welches zu einer definierten und gleichmäßigen Beabstandung der zwei benachbarten Lamellen eines Lamellenpaktes vorgesehen ist. Bevorzugt wird das Distanzelement zusammen mit den Lamellen an einem Innenlamellenträger und/oder einem Außenlamellenträger befestigt. Vorzugsweise ist zwischen jeden zwei benachbarten Lamellen eines Lamellenpaktes zumindest ein Distanzelement angeordnet. Des Weiteren soll in diesem Zusammenhang unter einem "Zwischenblech" insbesondere ein flaches, zusammenhängendes, insbesondere einstückig ausgebildetes Distanzelement verstanden werden. Vorzugsweise soll darunter insbesondere ein aus einem Blech gefertigtes Distanzelement verstanden werden. Das Zwischenblech ist insbesondere zu einer alleinigen Beabstandung der beiden angrenzenden Lamellen vorgesehen. Es ist daher insbesondere pro Zwischenraum zwischen zwei benachbarten Lamellen eines Lamellenpaktes lediglich ein als Zwischenblech ausgebildetes Distanzelement angeordnet. Es werden vorzugsweise nicht mehrere Distanzelemente pro Zwischenraum benötigt.

Es wird erfindungsgemäß vorgeschlagen, dass das zumindest eine Distanzelement zumindest eine Ölführungstasche aufweist, welche sich von dem Innenlamellenträger radial nach außen erstreckt. Erfindungsgemäß erstreckt sich die Olführungstasche von dem Innenlamellenträger radial, insbesondere relativ zu der Rotationsachse des Lamellenpakets, nach außen, über einen inneren, durchgehenden Ring der Lamellen hinweg. Bevorzugt ist die Ölführungstasche dazu vorgesehen, Öl an den durchgehenden Ringen der Lamellen vorbeizuführen. Dadurch kann insbesondere eine besonders zuverlässige Ölführung durch die Lamellenkupplung erreicht werden. Mittels der Ölführungstasche kann insbesondere erreicht werden, dass Öl in die Lamellenzwischenräume radial außerhalb des durchgehenden Rings gelangen kann. Hierdurch kann insbesondere ein ausreichender Volumenstrom zur Kühlung der Lamellen der Lamellenkupplung sichergestellt werden. Es kann insbesondere ein Temperaturniveau im Kupplungspaket gering gehalten werden. Ferner kann insbesondere eine vorteilhaft hohe Haltbarkeit der Lamellenkupplung erreicht werden. Es können Belagschäden vermieden werden. Unter einer "Ölführungstasche" soll in diesem Zusammenhang insbesondere eine kanalartige Ausnehmung verstanden werden, welche zu einer Führung von Öl vorgesehen ist. Vorzugsweise soll darunter insbesondere eine längliche Vertiefung und/oder Nut verstanden werden. Die Ölführungstasche des Distanzelements weist insbesondere eine Haupterstreckungsrichtung auf, welche sich zumindest im Wesentlichen in radialer Richtung zu einer Rotationsachse des Lamellenpakets erstreckt. Dabei soll unter einer "Haupterstreckungsrichtung" eines Objekts und/oder einer Ausnehmung insbesondere eine Richtung verstanden werden, welche parallel zu einer längsten Kante eines kleinsten geometrischen Quaders verläuft, welcher das Objekt gerade noch vollständig umschließt und insbesondere durch einen geometrischen Mittelpunkt des geometrischen Quaders verläuft.

Ferner wird vorgeschlagen, dass die zumindest zwei Lamellen und das zumindest eine Distanzelement an dem Innenlamellenträger angeordnet sind. Vorzugsweise sind die zumindest zwei Lamellen und das zumindest eine Distanzelement fest, insbesondere positionsfest, an dem Innenlamellenträger angeordnet. Vorzugsweise sind die Lamellen und das Distanzelement insbesondere positionsfest an dem Innenlamellenträger befestigt, vorzugsweise verschraubt. Die Lamellen des Lamellenpakets sind insbesondere von steggebundenen Lamellen gebildet. Dadurch kann insbesondere ein vorteilhaft kompakter und stabiler Aufbau der Lamellenkupplung erreicht werden. Ferner kann insbesondere zuverlässig eine Funktion des Distanzelements gewährleistet werden. Hierdurch kann eine Positionsgetreue der Lamellen gewährleistet werden.

Des Weiteren wird vorgeschlagen, dass das zumindest eine Distanzelement in zumindest einem wesentlichen Teilbereich flach geschliffen ist. Vorzugsweise ist das zumindest eine Distanzelement zumindest in einem Befestigungsbereich des Distanzelements flach geschliffen. Vorzugsweise ist das Distanzelement flach und planparallel bezüglich Kontaktflächen zwischen den Distanzelementen und den Lamellen geschliffen. Bevorzugt ist das zumindest eine Distanzelement mittels Flachschleifen bearbeitet. Dadurch kann insbesondere ein vorteilhaft ebenes Distanzelement bereitgestellt werden. Durch das flach geschliffene Distanzelement kann eine vorteilhaft homogene Pressungsverteilung erreicht werden. Insgesamt wird dadurch bewirkt, dass sich die zumindest zwei Lamellen, die an dem Distanzelement anliegen und zusammen mit dem Distanzelement axial befestigt sind, durch die axiale Befestigung in dem Anbindungsbereich und in einem an den Anbindungsbereich angrenzenden Bereich nicht verformen.

Besonders bevorzugt ist das als Zwischenblech ausgebildete Distanzelement eben ausgebildet. Mit der ebenen Ausbildung ist gemeint, dass eine obere Oberfläche und eine untere Oberfläche des Distanzelementes in zwei durch eine Blechdicke beabstandeten parallelen Ebenen angeordnet sind.

Das flachgeschliffene Distanzelement weist beispielsweise bei einem Anzugsmoment von 50 Nm eine homogene Pressungsverteilung über die gesamte Fläche auf, wodurch ein Pressungsniveau gering gehalten werden kann. Bei Verwendung eines Distanzelements mit Randabfall nimmt das Lüftspiel mit zunehmendem Schraubenanzugsmoment ab. Bei dem flachgeschliffenen Distanzelement hingegen zeigen sich nur geringe Abhängigkeiten, welche auf das Setzverhalten beim Verschrauben zurückzuführen sind. Unter "flach geschliffen" soll in diesem Zusammenhang insbesondere verstanden werden, dass das Distanzelement in einem Teilbereich mittels Flachschleifen, insbesondere mittels eines Flachschleifprozesses, bearbeitet wird. Die erreichbare Oberflächenqualität beim Flachschleifen liegt insbesondere bei Oberflächenrautiefen von Rz 1 µm bis 6,3 µm.

Ferner wäre denkbar, beispielsweise für eine Serienfertigung, das Distanzelement aufgrund der hohen Stückzahl mittels Stanzen herzustellen. Dabei wäre insbesondere denkbar, den hierbei entstehenden Stanzeinzug durch eine Vergrößerung des Distanzelements nach außen hin vorzuhalten. Hierdurch würde ein Befestigungsbereich unter einer Verschraubung weiterhin mit ausreichender Ebenheit abgestützt und es wäre kein zusätzliches Flachschleifen nötig. Entspricht die Stanzrichtung der Betätigungsrichtung der Lamellen, könnte der Stanzeinzug als Verrundung wirken und so die Spannungen im Einspannungsbereich der Stege der Lamellen positiv beeinflussen, wie es bei angefasten Unterlegscheiben in Laschenkupplungen der Fall ist.

Es wird ferner vorgeschlagen, dass das zumindest eine Distanzelement eine ringförmige Grundform aufweist. Vorzugsweise weist das zumindest eine Distanzelement eine ringförmige Grundform auf, mit welcher sich das zumindest eine Distanzelement insbesondere um den Innenlamellenträger erstreckt. Bevorzugt liegt das zumindest eine Distanzelement zumindest teilweise an den Innenlamellenträger an. Besonders bevorzugt ist das Distanzelement gegenüber einer Rotationsachse des Lamellenpakets punktsymmetrisch. Dadurch kann insbesondere ein vorteilhaftes Distanzelement bereitgestellt werden. Es kann insbesondere ein leicht zu montierendes Distanzelement bereitgestellt werden. Ferner kann insbesondere ein Distanzelement bereitgestellt werden, mittels welchem eine zuverlässige und gleichmäßige Beabstandung der Lamellen erreicht werden kann.

Es wird weiter vorgeschlagen, dass das zumindest eine Distanzelement mehrere Befestigungsringe sowie mehrere die Befestigungsringe verbindende, S-förmige Stege aufweist. Vorzugsweise sind die Befestigungsringe und die S-förmigen Stege einstückig ausgebildet. Besonders bevorzugt entspricht eine Anzahl von Befestigungsringen einer Anzahl von S-förmigen Stegen. Dadurch kann insbesondere eine vorteilhafte Geometrie des Distanzelements bereitgestellt werden. Es kann ein vorteilhaftes Distanzelement mit einem geringen Materialeinsatz bereitgestellt werden. Vorzugsweise kann ein leichtes aber zusammenhängendes Distanzelement bereitgestellt werden. Unter einem "Befestigungsring" soll in diesem Zusammenhang insbesondere ein ringförmiger Teilbereich des Distanzelements verstanden werden, der zu einer Anbindung des Distanzelements an einen Innenlamellenträger oder Außenlamellenträger vorgesehen ist. Vorzugsweise bildet der Befestigungsring insbesondere eine Aufnahme, vorzugsweise eine Bohrung zu einer Aufnahme einer Befestigungsschraube aus. Der Befestigungsring ist insbesondere dazu vorgesehen, sich in einem befestigten Zustand um eine Befestigungsschraube herum zu erstrecken. Unter einem "S-förmigen Steg" soll in diesem Zusammenhang insbesondere ein Verbindungssteg zu einer Verbindung der Befestigungsringe verstanden werden. Vorzugsweise weist der Steg entlang einer Erstreckung von einem Befestigungsring zu einem benachbarten Befestigungsring einen zumindest teilweise S-förmigen Verlauf auf. Bevorzugt weist der Steg entlang einer Erstreckung von einem Befestigungsring zu einem benachbarten Befestigungsring zumindest zwei Richtungsänderungen in verschiedene Richtungen auf. Unter "einstückig" soll insbesondere zumindest stoffschlüssig verbunden verstanden werden, beispielsweise durch einen Schweißprozess, einen Klebeprozess, einen Anspritzprozess und/oder einen anderen, einem Fachmann als sinnvoll erscheinenden Prozess, und/oder vorteilhaft in einem Stück geformt verstanden werden, wie beispielsweise durch eine Herstellung aus einem Guss und/oder in einem gemeinsamen Stanzverfahren und/oder durch eine Herstellung in einem Ein- oder Mehrkomponentenspritzverfahren und vorteilhaft aus einem einzelnen Rohling.

Ferner wird vorgeschlagen, dass sich die S-förmigen Stege jeweils von einem ersten Befestigungsring von einer radialen Innenseite des Distanzelements zu einem benachbarten zweiten Befestigungsring zu einer radialen Außenseite des Distanzelements hin erstrecken. Vorzugsweise erstrecken sich ich die S-förmigen Stege jeweils von einem ersten Befestigungsring von einer radialen Innenseite des Distanzelements, insbesondere relativ zu einer Rotationsachse des Lamellenpakets, zu einem in Umfangsrichtung benachbarten zweiten Befestigungsring zu einer radialen Außenseite des Distanzelements, insbesondere ebenfalls relativ zu einer Rotationsachse des Lamellenpakets. Die S-förmigen Stege vergrößern demnach insbesondere entlang Ihrer Erstreckung von einem ersten Befestigungsring zu einem benachbarten zweiten Befestigungsring ihren Abstand zu der Rotationsachse des Lamellenpakets. Dadurch kann insbesondere eine vorteilhafte Geometrie des Distanzelements bereitgestellt werden. Vorzugsweise kann dadurch insbesondere eine Federwirkung des Distanzelements in Umfangsrichtung bereitgestellt werden. Ferner können Toleranzen in Umfangsrichtung ausgeglichen werden, ohne eine Verbiegung des Distanzelements in axialer Richtung zur Folge zu haben.

Des Weiteren wird vorgeschlagen, dass die Befestigungsringe des zumindest einen Distanzelements auf einem gemeinsamen Radius in Umfangsrichtung gleichmäßig verteilt angeordnet sind. Vorzugsweise weist das zumindest eine Distanzelement zumindest zwei, vorzugsweise zumindest vier und besonders bevorzugt zumindest sechs Befestigungsringe auf, die in Umfangsrichtung, insbesondere relativ zu einer Rotationsachse des Lamellenpakets, gleichmäßig verteilt angeordnet sind. Besonders bevorzugt weist das zumindest eine Distanzelement genau sechs Befestigungsringe auf. Dadurch kann insbesondere eine vorteilhafte Geometrie des Distanzelements bereitgestellt werden. Es kann insbesondere eine vorteilhaft gleichmäßige Befestigung des zumindest einen Distanzelements erreicht werden. Vorzugsweise kann dadurch eine gleichmäßige Kraftverteilung erreicht werden. Es kann insbesondere gewährleistet werden, dass bei der Einspannung der Lamellen eine homogene Pressungsverteilung erzielt wird.

Es wird weiter vorgeschlagen, dass die zumindest eine Lamellenkupplung zumindest einen Betätigungskolben zu einer Betätigung der Lamellenkupplung, zumindest einen Gegenhalter zu einem axialen Abstützen des Lamellenpakets gegen einen Druck des Betätigungskolbens und zumindest eine Zwischenlage aufweist, welche zwischen dem Lamellenpaket und dem Betätigungskolben und/oder dem Gegenhalter angeordnet ist und zu einem Ausgleich einer ungleichmäßigen Einspannsituation vorgesehen ist. Vorzugsweise weist die Lamellenkupplung zumindest zwei Zwischenlagen auf, welche zwischen dem Lamellenpaket und dem Betätigungskolben und dem Lamellenpaket und dem Gegenhalter angeordnet sind. Die zumindest eine Zwischenlage ist vorzugsweise von einer Stahlfolie, insbesondere mit einer Stärke von 0,2 mm, gebildet. Dadurch kann insbesondere eine vorteilhaft gleichmäßige und zuverlässige Einspannung des Lamellenpakets erreicht werden. Insbesondere bei einer hohen Vorspannkraft entsteht zwischen einem Lamellensteg der Lamellen des Lamellenpakets und dem Gegenhalter eine hohe Pressung. Dieser Pressungsbereich wird nicht von dem Distanzelement unterstützt, wodurch sich der Steg einer äußeren Lamelle des Lamellenpakets weiter nach unten biegt. Bereiche, die über das Distanzelement hinausreichen, sind demnach nicht unterstützt. Ein flachgeschliffenes Distanzelement vergrößert diesen Bereich weiter, da hier die Lamellen des Lamellenpakets im Randbereich des Gegenhalters nicht durch den Randabfall ausweichen können. Diese ungleichmäßige Einspannsituation lässt sich durch die zumindest eine Zwischenlage ausgleichen. Hierdurch kann insbesondere, vorzugsweise in Kombination mit flachgeschliffenen Distanzelementen, eine Abweichung, insbesondere in einem Randbereich des Lamellenpakets, vom theoretischen Lüftspiel gering gehalten werden. Ferner soll unter einem "Betätigungskolben" in diesem Zusammenhang insbesondere eine Einheit der Lamellenkupplung verstanden werden, welche zu einer Betätigung der Lamellenkupplung vorgesehen ist. Vorzugsweise soll darunter insbesondere eine Einheit verstanden werden, die dazu vorgesehen ist, Lamellen der Lamellenkupplung, insbesondere quer zu einer Rotationsachse, mit einer Kraft zu beaufschlagen. Vorzugsweise ist der Betätigungskolben insbesondere dazu vorgesehen, gegeneinander verdrehbare Lamellen der Lamellenkupplung gegeneinander zu drücken, um eine relative Verdrehung zumindest zu hemmen. Des Weiteren soll in diesem Zusammenhang unter einem "Gegenhalter" insbesondere ein Bauteil der Lamellenkupplung verstanden werden, welches dazu vorgesehen ist, bei einer Betätigung der Lamellenkupplung durch den Betätigungskolben eine der Kraft des Betätigungskolbens entgegengerichtete Gegenkraft aufzubringen, welche ein Wegdrücken und/oder ein Ausweichen der Lamellen, insbesondere in axialer Richtung, verhindern soll. Der Gegenhalter dient insbesondere zu einer Stabilisierung des Lamellenpakets. Vorzugsweise ist der Gegenhalter auf einer dem Betätigungskolben abgewandten Seite des Lamellenpakets angeordnet.

Des Weiteren geht die Erfindung aus von einem Hybrid-Triebkopf mit zumindest einer E-Maschine und mit der zumindest einen Lamellenkupplung. Es wird vorgeschlagen, dass die zumindest eine Lamellenkupplung radial innerhalb der E-Maschine angeordnet ist. Vorzugsweise umgreift die E-Maschine zumindest teilweise die Lamellenkupplung des Hybrid-Triebkopfs. Bevorzugt ist die E-Maschine insbesondere von einem kreisringförmigen Elektromotor gebildet. Die E-Maschine dient insbesondere zu einer Bereitstellung eines Hybridantriebs. Dadurch kann insbesondere ein vorteilhaft kompakter Hybrid-Triebkopf bereitgestellt werden. Durch den kompakten Aufbau der Lamellenkupplung kann insbesondere vorteilhaft eine Anordnung der E-Maschine radial außerhalb des Lamellenkupplung erreicht werden. Unter einem "Hybrid-Triebkopf" soll in diesem Zusammenhang insbesondere ein Triebkopf eines Kraftfahrzeugs, insbesondere eines Hybrid-Kraftfahrzeugs, verstanden werden. Vorzugsweise soll darunter insbesondere ein Triebkopf verstanden werden, welcher zumindest eine E-Maschine umfasst. Bevorzugt soll darunter insbesondere eine Einheit eines Kraftfahrzeuggetriebes verstanden werden, welche entlang eines Antriebsstrangs vor einem eigentlichen schaltbaren Getriebe des Kraftfahrzeuggetriebes angeordnet ist. Besonders bevorzugt umfasst der Hybrid-Triebkopf zumindest eine E-Maschine und zumindest eine Kupplung. Insbesondere umfasst der Hybrid-Triebkopf zumindest eine E-Maschine und zumindest einen Drehmomentwandler, welcher insbesondere zumindest bei einem Anfahrvorgang ein Drehmoment einer Antriebseinheit in ein Drehmoment wandelt, das auf eine mit den Rädern des Kraftfahrzeugs verbundene Abtriebseinheit wirkt. Der Drehmomentwandler umfasst vorzugsweise die Lamellenkupplung. Die E-Maschine ist insbesondere von einem Elektromotor gebildet. Die E-Maschine dient insbesondere zu einer Bereitstellung eines Hybridantriebs. Die E-Maschine bildet insbesondere eine zu einem Verbrennungsmotor parallele Antriebseinheit. Unter "radial innerhalb" soll in diesem Zusammenhang insbesondere verstanden werden, dass ein minimaler Abstand der E-Maschine zu einer Rotationsachse der Lamellenkupplung größer ist als ein minimaler Abstand der Lamellenkupplung zu der Rotationsachse der Lamellenkupplung. Vorzugsweise ist die E-Maschine in zumindest einer Ebene, welche die E-Maschine und die Lamellenkupplung schneidet und sich senkrecht zu der Rotationsachse der Lamellenkupplung erstreckt, ausgehend von der Rotationsachse der Lamellenkupplung außerhalb der Lamellenkupplung angeordnet.

Es wird weiter vorgeschlagen, dass die zumindest eine Lamellenkupplung von einer Wandlerüberbrückungskupplung gebildet ist. Dadurch kann insbesondere ein vorteilhaft effizienter Hybrid-Triebkopf bereitgestellt werden. Unter einer "Wandlerüberbrückungskupplung" soll in diesem Zusammenhang insbesondere eine Kupplung eines Drehmomentwandlers verstanden werden, welche zu einer Überbrückung von drehmomentwandelnden Teilen des Drehmomentwandlers vorgesehen ist. Vorzugsweise soll darunter insbesondere eine Kupplung verstanden, welche ein Pumpenrad und ein Turbinenrad des Drehmomentwandlers mechanisch verbindet. Hierdurch entsteht insbesondere eine direkte mechanische Verbindung zwischen Antriebs- und Abtriebsseite des Drehmomentwandlers, wobei eine Drehmomentwandlung unterbunden wird.

Weitere Vorteile ergeben sich aus der folgenden Figurenbeschreibung. In den Figuren ist ein Ausführungsbeispiel der Erfindung dargestellt. Die Figuren, die Figurenbeschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Dabei zeigen:
- Fig. 1: eine schematische Darstellung eines Kraftfahrzeugs mit einer Antriebseinheit und mit einem Kraftfahrzeuggetriebe, welches einen Hybrid-Triebkopf aufweist, in einer schematischen Darstellung,
- Fig. 2: das Kraftfahrzeuggetriebe mit dem Hybrid-Triebkopf, welcher eine Lamellenkupplung aufweist, in einer schematischen Schnittdarstellung,
- Fig. 3: einen Teilausschnitt III-III des Hybrid-Triebkopfs mit der Lamellenkupplung, welche einen Innenlamellenträger, einen Außenlamellenträger, ein erstes Lamellenpaket und ein zweites Lamellenpaket aufweist, in einer schematischen Schnittdarstellung,
- Fig. 4: den Teilausschnitt III-III des Hybrid-Triebkopfs mit der Lamellenkupplung in einer alternativen Drehstellung des Innenlamellenträgers, in einer schematischen Schnittdarstellung,

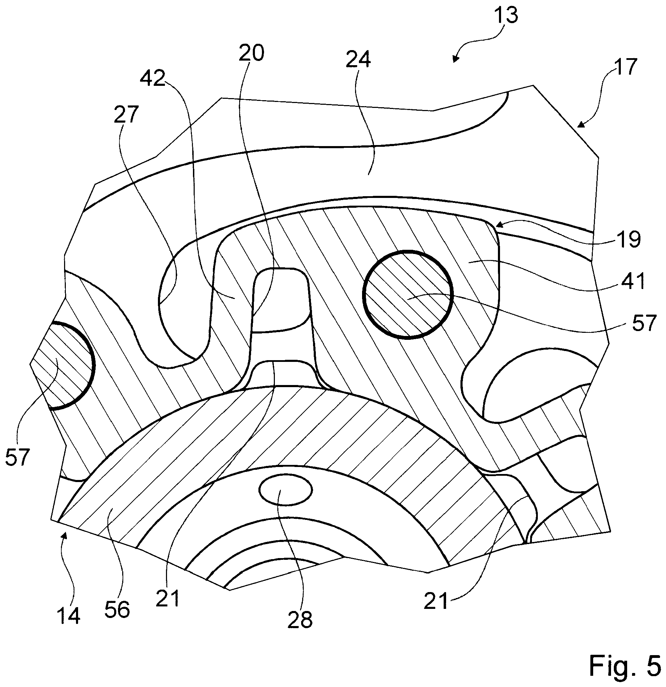

- Fig. 5: ein Teilausschnitt der Lamellenkupplung mit dem Lamellenpaket und mit zwischen Lamellen des Lamellenpakets angeordneten Distanzelementen in einer schematischen Schnittdarstellung entlang der Schnittlinie V-V,
- Fig. 6: eine Lamelle des Lamellenpakets der Lamellenkupplung in einer schematischen Draufsicht und
- Fig. 7: ein Distanzelement der Lamellenkupplung in einer schematischen Draufsicht.

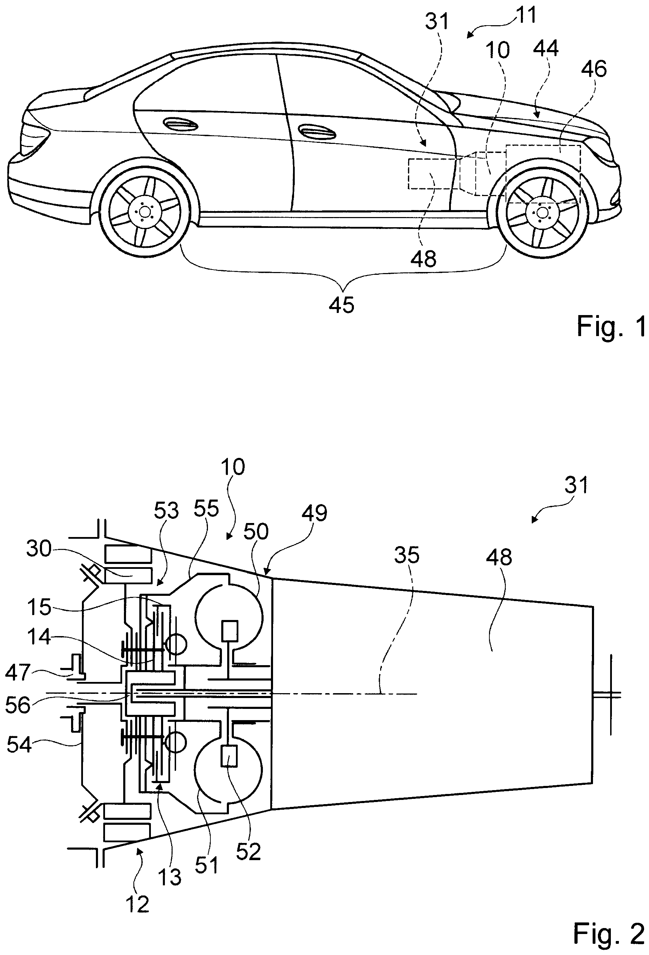

Die Figur 1 zeigt schematisch ein Kraftfahrzeug 11. Das Kraftfahrzeug 11 ist von einem Hybrid-Kraftfahrzeug gebildet. Das Kraftfahrzeug 11 umfasst einen Antriebsstrang 44, über welchen nicht weiter sichtbar Antriebsräder 45 des Kraftfahrzeugs 11 angetrieben werden. Der Antriebsstrang 44 umfasst eine Antriebseinheit 46. Die Antriebseinheit 46 ist von einem Verbrennungsmotor gebildet. Ferner umfasst das Kraftfahrzeug 11 eine weitere Antriebseinheit, welche in ein Kraftfahrzeuggetriebe 31 des Kraftfahrzeugs 11 integriert ist. Die weitere Antriebseinheit bildet ein Teil des Kraftfahrzeuggetriebes 31. Die weitere Antriebseinheit ist von einer E-Maschine 12 gebildet. Die E-Maschine 12 ist von einem Elektromotor gebildet. Die Antriebseinheit 46 weist eine angetriebene Kurbelwelle 47 auf, welche in das Kraftfahrzeuggetriebe 31 ragt. Das Kraftfahrzeug 11 weist das Kraftfahrzeuggetriebe 31 auf. Das Kraftfahrzeuggetriebe 31 bildet einen Teil des Antriebsstrangs 44 des Kraftfahrzeugs 11. Das Kraftfahrzeuggetriebe 31 ist entlang des Antriebsstrangs 44, insbesondere entlang eines Kraftflusses des Antriebsstrangs 44, hinter der Antriebseinheit 46 angeordnet. Das Kraftfahrzeuggetriebe 31 wird in zumindest einem Betriebszustand über die Antriebseinheit 46 angetrieben. Das Kraftfahrzeuggetriebe 31 weist einen Hybrid-Triebkopf 10 und ein Automatikgetriebe 48 auf. Der Hybrid-Triebkopf 10 ist entlang eines Kraftflusses vor dem Automatikgetriebe 48 angeordnet. Die Kurbelwelle 47 der Antriebseinheit 46 ragt in den Hybrid-Triebkopf 10 des Kraftfahrzeuggetriebes 31. Der Hybrid-Triebkopf 10 ist für das Kraftfahrzeug 11 vorgesehen. Der Hybrid-Triebkopf 10 weist die E-Maschine 12 auf (Figur 2).

Ferner weist der Hybrid-Triebkopf 10 eine Wandlereinheit 49 auf. Die Wandlereinheit 49 bildet einen Drehmomentwandler aus. Die Wandlereinheit 49 umfasst ein Pumpenrad 50, ein Turbinenrad 51 und ein Leitrad 52, die für eine hydrodynamische Drehmomentübertragung vorgesehen sind. Das Pumpenrad 50 weist eine Mehrzahl von Schaufeln auf, die dazu vorgesehen sind, ein Betriebsmittel, wie insbesondere ein Öl, zu erfassen und zu beschleunigen. Das Pumpenrad 50 ist dazu vorgesehen, im Wesentlichen drehfest mit der Kurbelwelle 47 der Antriebseinheit 46 verbunden zu werden. Das Pumpenrad 50 ist dazu mit einem Wandlerdeckel 53 des Hybrid-Triebkopfs 10 verbunden. Der Wandlerdeckel 53 des Hybrid-Triebkopfs 10 ist wiederum über eine Flexplate 54 des Hybrid-Triebkopfs 10 mit der Kurbelwelle 47 der Antriebseinheit 46 verbunden. Für eine Übertragung des von der Antriebseinheit 46 bereitgestellten Drehmoments wandelt das Pumpenrad 50 eine von der Antriebseinheit 46 bereitgestellte mechanische Energie in Strömungsenergie um. Das Pumpenrad 50 bildet eine Primärseite der Wandlereinheit 49 aus. Das Turbinenrad 51 ist dazu vorgesehen, die von dem Pumpenrad 50 bereitgestellte Strömungsenergie aufzunehmen und als mechanische Energie bereitzustellen. Das Turbinenrad 51 ist dazu vorgesehen, mit einer Getriebeeingangswelle des dem Hybrid-Triebkopf 10 nachgeschalteten Automatikgetriebes 48 verbunden zu werden. Das Turbinenrad 51 bildet eine Sekundärseite der Wandlereinheit 49 aus. Die Wandlereinheit 49 umfasst ferner einen Freilauf, der dazu vorgesehen ist, das Leitrad 52 gehäusefest abzustützen (Figur 2).

Des Weiteren weist der Hybrid-Triebkopf 10 den Wandlerdeckel 53 auf. Der Wandlerdeckel 53 ist dazu vorgesehen, das Turbinenrad 51 und das Leitrad 52 zu übergreifen und eine Antriebsbewegung der Antriebseinheit 46 auf das Pumpenrad 50 zu übertragen. Der Wandlerdeckel 53 weist eine Deckelschale 55 und eine mit der Deckelschale 55 fest verbundene Nabe 56 auf. Die Nabe 56 bildet eine Rotationsachse des Wandlerdeckels 53. Die Deckelschale 55 ist im Wesentlichen schalenförmig ausgebildet. Mittels der Schalenform der Deckelschale 55 wird ein Übergreifen realisiert. Die Deckelschale 55 schließt an das Pumpenrad 50 der Wandlereinheit 49 an. Die Deckelschale 55 schließt mit einer radial äußeren Kante an das Pumpenrad 50 an. Die Deckelschale 55 ist nicht weiter sichtbar drehfest mit dem Pumpenrad 50 verbunden. Ferner ist die Deckelschale 55 einstückig mit der Nabe 56 ausgebildet. Die Nabe 56 ist über eine Schweißnaht mit der Deckelschale 55 verbunden. Die Schweißnaht ist von einer umlaufenden Schweißnaht gebildet. Die Deckelschale 55 ist über eine radial innenliegende Kante mit der Nabe 56 verbunden. Ferner weist die Nabe 56 auf ihrer Mantelfläche einen kreisringförmigen Fortsatz auf, an welchen die Deckelschale 55 mittels der Schweißnaht angeschweißt ist.

Die Nabe 56 weist ferner eine gestufte Kontur auf. Eine Kontur der Nabe 56 bildet zwei Stufen aus. Die Nabe 56 weist daher entlang der Rotationsachse des Wandlerdeckels 53 unterschiedliche Radien auf, wobei die Stufen jeweils einen zumindest im Wesentlichen konstanten Radius aufweisen. Die Nabe 56 weist eine radial innere Stufe auf. Ferner weist die Nabe 56 eine radial äußere Stufe auf. Der kreisringförmige Fortsatz der Nabe 56 ist auf einer Außenkontur der radial äußeren Stufe angeordnet. Die radial innere Stufe schließt auf einer dem Turbinenrad 51 zugewandten Seite an die radial äußere Stufe an.

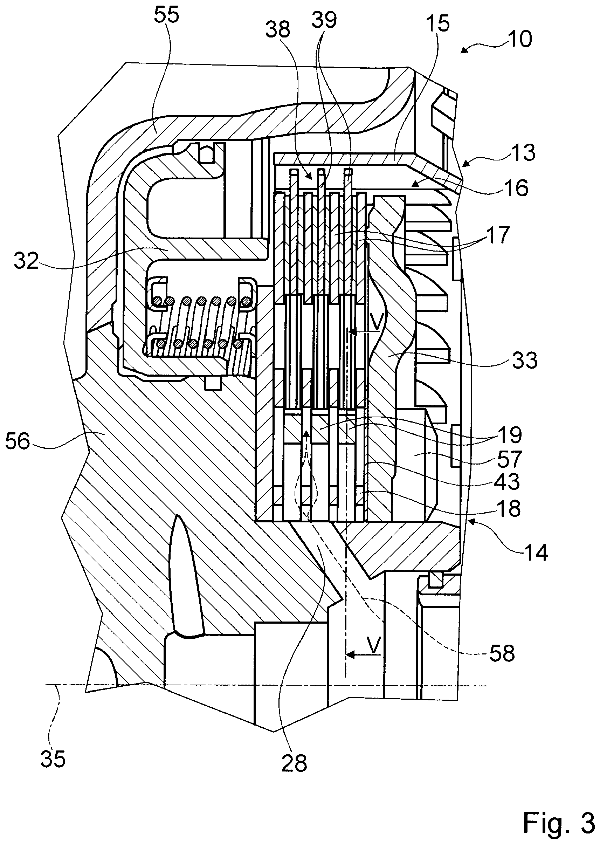

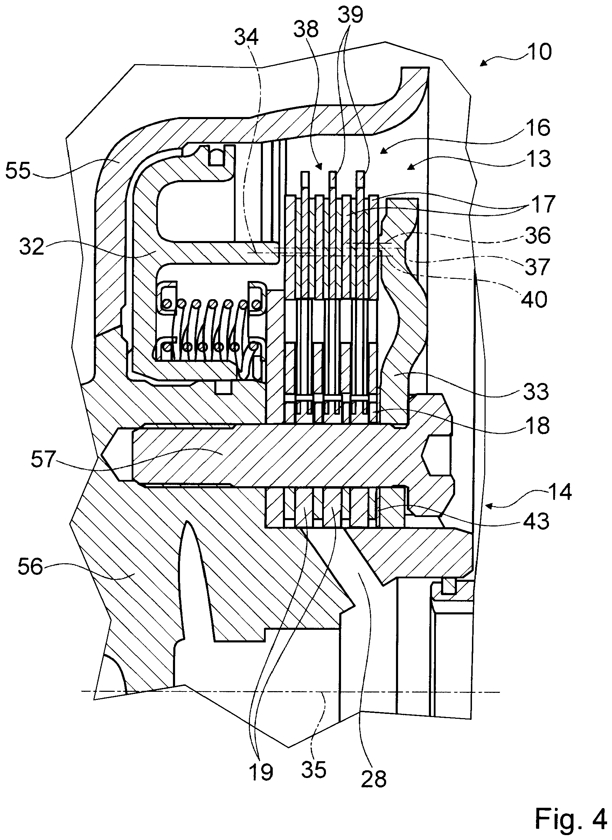

Ferner weist der Hybrid-Triebkopf 10 eine Lamellenkupplung 13 auf. Die Lamellenkupplung 13 ist von einer Wandlerüberbrückungskupplung gebildet. Die Lamellenkupplung 13 ist in zumindest einem Betriebszustand dazu vorgesehen, das Pumpenrad 50 und das Turbinenrad 51 mechanisch miteinander zu verbinden. Die Lamellenkupplung 13 verbindet dazu den Wandlerdeckel 53 mechanisch mit dem Turbinenrad 51. Die Lamellenkupplung 13 weist einen Innenlamellenträger 14 auf. Der Innenlamellenträger 14 ist drehfest mit dem Wandlerdeckel 53 verbunden. Die Nabe 56 des Wandlerdeckels 53 bildet den Innenlamellenträger 14 der Lamellenkupplung 13 aus. Die Nabe 56 ist einstückig mit dem Innenlamellenträger 14 ausgebildet. Der Innenlamellenträger 14 ist an der radial inneren Stufe der Nabe 56 ausgebildet. Ferner weist die Lamellenkupplung 13 einen Außenlamellenträger 15 auf. Der Außenlamellenträger 15 ist drehfest mit dem Turbinenrad 51 verbunden. Der Außenlamellenträger 15 ist von einem den Innenlamellenträger 14 übergreifenden Korb gebildet. In der Figur 4 ist der Außenlamellenträger 15 der Übersichtlichkeit halber ausgeblendet. Ferner weist die Lamellenkupplung 13 ein Lamellenpaket 16 auf. Das Lamellenpaket 16 ist fest an dem Innenlamellenträger 14 angebunden. Das Lamellenpaket 16 weist zumindest zwei Lamellen 17 auf. Das Lamellenpaket 16 weist mehrere Lamellen 17 auf. Das Lamellenpaket 16 weist beispielhaft vier Lamellen 17 auf. Die Lamellen 17 sind identisch ausgebildet (Figur 3, 4).

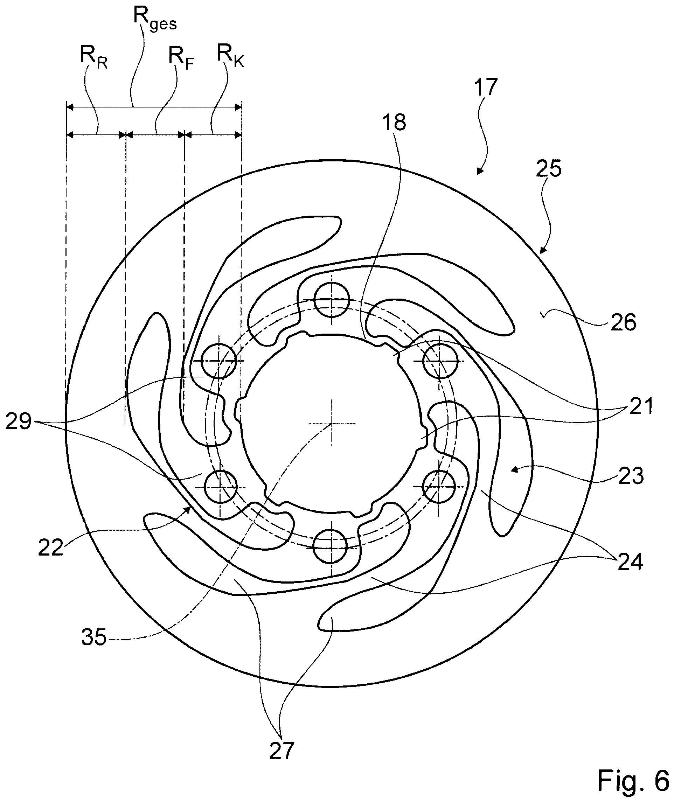

Die Lamellen 17 sind jeweils von Stahllamellen gebildet. Die Lamellen 17 bestehen aus einer dünnen Stahlplatte. Die Lamellen 17 weisen eine Dicke von annähernd 1,5 mm auf. Ferner weisen die Lamellen 17 einen Durchmesser von annähernd 160 mm auf. Die Lamellen 17 weisen jeweils eine ringförmige Grundform auf, welche sich in Umfangsrichtung um eine Rotationsachse 35 des Lamellenpakets 16 erstreckt. Ferner weisen die Lamellen 17 jeweils an einem Innenumfang einen durchgehenden Ring 18 auf. Ein Innenumfang der Lamellen 17 ist daher geschlossen ausgebildet. Die Lamellen 17 weisen jeweils drei radiale Bereiche auf. Die Lamellen 17 weisen einen Klemmbereich 22 auf. Der Klemmbereich 22 grenzt direkt an den Innenradius der jeweiligen Lamelle 17 an. Der Klemmbereich 22 umfasst den durchgehenden Ring 18. Ferner weist der Klemmbereich 22 mehrere Befestigungsbereiche 29 in dem durchgehenden Ring 18 auf. Der Klemmbereich 22 weist beispielhaft sechs Befestigungsbereiche 29 auf. Die Befestigungsbereiche 29 sind in Umfangsrichung gleichmäßig an dem Innenumfang der Lamellen 17 verteilt. Die Befestigungsbereiche 29 sind jeweils von Befestigungsringen zu einer Verschraubung der Lamellen 17 an dem Innenlamellenträger 14 gebildet. Die Lamellen 17 können daher durch den als Befestigungsring ausgebildeten Befestigungsbereich 29 hindurch verschraubt werden. Ferner weisen die Lamellen 17 einen Reibbereich 25 auf. Der Reibbereich 25 ist von einem radial außenliegenden Reibbereich 25 gebildet. Der Reibbereich 25 weist zwei Reibflächen 26 auf. Die Reibflächen 26 sind auf gegenüberliegenden Stirnseiten der jeweiligen Lamelle 17 angeordnet. Die Reibflächen 26 erstrecken sich parallel zu einer Haupterstreckungsebene der jeweiligen Lamelle 17. Die Reibflächen 26 sind jeweils ringförmig ausgebildet. Des Weiteren weisen die Lamellen 17 jeweils einen Federbereich 23 auf. Der Federbereich 23 ist radial innerhalb des Reibbereichs 25 angeordnet. Radial innerhalb des Reibbereichs 25 ist der Federbereich 23 und der Klemmbereich 22 angeordnet. Die Lamellen 17 weisen daher jeweils radial aufeinanderfolgend den Klemmbereich 22 mit dem durchgehenden Ring 18, den Federbereich 23 mit federnden Stegen 24 und den Reibbereich 25 mit den Reibflächen 26 auf. Der Federbereich 23 ist zwischen dem Klemmbereich 22 und dem Reibbereich 25 angeordnet. Der Federbereich 23 verbindet den Reibbereich 25 federnd mit dem Klemmbereich 22. Der Federbereich 23 weist dazu die federnden Stege 24 auf. Der Federbereich 23 weist beispielhaft sechs federnde Stege 24 auf. Die federnden Stege 24 sind jeweils von S-förmigen Stegen gebildet, die sich von einem Außenumfang des Klemmbereichs 22 zu einem Innenumfang des Reibbereichs 25 erstrecken. Die federnden Stege 24 erstrecken sich jeweils von den Befestigungsbereichen 29 des Klemmbereichs 22 hin zu einem Innenumfang des Reibbereichs 25. Die federnden Stege 24 einer Lamelle 17 sind jeweils in Umfangsrichtung um die Rotationsachse 35 des Lamellenpakets 16 gleichmäßig verteilt. Zwischen den federnden Stegen 24 ist jeweils eine Lücke angeordnet. Der Klemmbereich 22, der Federbereich 23 und der Reibbereich 25 der Lamellen 17 erstrecken sich jeweils über annähernd ein Drittel des gesamten Lamellenradiusbereichs R_{ges}. Ein Radiusbereich R_{K} des Klemmbereichs 22, ein Radiusbereich R_{F} des Federbereichs 23 und ein Radiusbereich R_{R} des Reibbereichs 25 sind im Wesentlichen identisch (Figur 6).

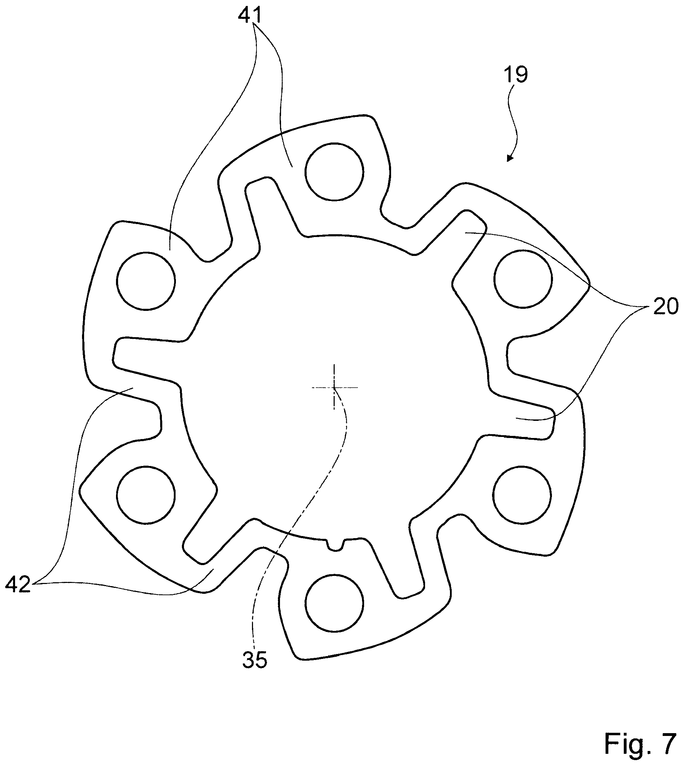

Die Lamellenkupplung 13 weist ferner mehrere zwischen den Lamellen 17 angeordnete Distanzelemente 19 auf. Die Distanzelemente 19 sind jeweils zwischen jedem Paar von benachbarten Lamellen 17 angeordnet. Zwischen jedem Paar von benachbarten Lamellen 17 ist ein Distanzelement 19 angeordnet. Die Lamellenkupplung 13 weist beispielhaft drei Distanzelemente 19 auf. Die Distanzelemente 19 sind zu einer gleichmäßigen Beabstandung der Lamellen 17 vorgesehen. Die Distanzelemente 19 sind an dem Innenlamellenträger 14 angeordnet. Die Lamellen 17 und die Distanzelemente 19 sind an dem Innenlamellenträger 14 angeordnet. Die Distanzelemente 19 sind jeweils identisch ausgebildet. Die Distanzelemente 19 sind jeweils als Zwischenblech ausgebildet. Die Distanzelemente 19 weisen jeweils eine Dicke von annähernd 3 mm auf. Die Distanzelemente 19 weisen jeweils eine ringförmige Grundform auf. Ferner weisen die Distanzelemente 19 jeweils mehrere Befestigungsringe 41 sowie mehrere die Befestigungsringe 41 verbindende, S-förmige Stege 42 auf. Die Distanzelemente 19 weisen beispielhaft sechs Befestigungsringe 41 und sechs S-förmige Stege 42 auf. Die S-förmigen Stege 42 und die Befestigungsringe 41 eines Distanzelements 19 sind jeweils einstückig ausgebildet. Die Distanzelemente 19 sind beispielhaft in einem Stanzprozess hergestellt. Die Befestigungsringe 41 dienen zu einer Befestigung der Distanzelemente 19 an dem Innenlamellenträger 14. Die Distanzelemente 19 können durch die Befestigungsringe 41 hindurch an dem Innenlamellenträger 14 verschraubt werden. Die Befestigungsringe 41 eines Distanzelements 19 sind jeweils auf einem gemeinsamen Radius in Umfangsrichtung gleichmäßig verteilt angeordnet. Die S-förmigen Stege 42 verbinden die Befestigungsringe 41 desselben Distanzelements 19. Die S-förmigen Stege 42 erstrecken sich jeweils von einem ersten Befestigungsring 41 von einer radialen Innenseite des Distanzelements 19 zu einem benachbarten zweiten Befestigungsring 41 zu einer radialen Außenseite des Distanzelements 19 hin. Ferner sind die Distanzelemente 19 zumindest in einem wesentlichen Teilbereich flach geschliffen. Die Distanzelemente 19 sind zumindest an den Stirnseiten der Befestigungsringe 41 flach geschliffen. Grundsätzlich wäre jedoch auch denkbar, dass die kompletten Stirnseiten der Distanzelemente 19 flach geschliffen sind (Figur 7).

Des Weiteren weist die Lamellenkupplung 13 ein zweites Lamellenpaket 38 auf. Das zweite Lamellenpaket 38 ist drehfest mit dem Außenlamellenträger 15 verbunden. Das zweite Lamellenpaket 38 ist drehfest axial beweglich in dem Außenlamellenträger 15 mittels einer Verzahnung gehalten. Ferner umfasst das zweite Lamellenpaket 38 zumindest zwei Lamellen 39. Das zweite Lamellenpaket 38 weist mehrere Lamellen 39 auf. Das zweite Lamellenpaket 38 weist beispielhaft drei Lamellen 39 auf. Die Lamellen 39 sind jeweils von Stahllamellen gebildet. Ferner sind die Lamellen 39 des zweiten Lamellenpakets 38 mit Reibbelägen versehen. Die Lamellen 39 des zweiten Lamellenpakets 38 greifen jeweils von außen in Lücken zwischen den Lamellen 17 des Lamellenpakets 16. Mittels der Distanzelemente 19 werden die Lamellen 17 des Lamellenpakets 16 derart beabstandet, dass, in einem unbetätigten Zustand der Lamellenkupplung 13, in axialer Richtung ein Spalt zwischen den Lamellen 17, 39 angeordnet ist (Figur 3).

Die Lamellen 17 des Lamellenpakets 16 der Lamellenkupplung 13 sind zusammen mit den Distanzelementen 19 und mit einem Gegenhalter 33 der Lamellenkupplung 13 mittels Schrauben 57 an den Innenlamellenträger 14 angeschraubt. Die Lamellen 17 sind auf der radial inneren Stufe der Nabe 56 in axialer Richtung gegen eine Stirnseite der radial äußeren Stufe verschraubt. Die Schrauben 57 sind zu einer Verschraubung durch die Befestigungsbereiche 29 der Lamellen 17 sowie durch die Befestigungsringe 41 der Distanzelemente 19 geführt. Die Schrauben 57 sind beispielhaft von einer Dehnschraube gebildet. Zu einer Verbesserung einer Flächenpressung ist ein Schraubenkopf der Schrauben 57 nachträglich plangedreht. Der Gegenhalter 33 ist auf einer Seite der Lamellen 17 angeordnet. Die Lamellen 17 der Lamellenkupplung 13 erstrecken sich ringförmig um die Nabe 56. In einem unbetätigten Zustand der Lamellenkupplung 13 ist der Außenlamellenträger 15 relativ zu dem Innenlamellenträger 14 drehbar. Ferner weist die Lamellenkupplung 13 einen Betätigungskolben 32 zu einer Betätigung der Lamellenkupplung 13 auf. Der Betätigungskolben 32 erstreckt sich ringförmig um die Nabe 56 des Wandlerdeckels 53. Der Betätigungskolben 32 ist in radialer Richtung gegenüber der Rotationsachse 35 des Lamellenpakets 16 im Wesentlichen dicht zwischen der Nabe 56 und einer Innenseite der Deckelschale 55 angeordnet. Der Betätigungskolben 32 liegt in radialer Richtung an einer Innenseite einer Stufe der Deckelschale 55 an. Der Betätigungskolben 32 ist an der radial äußeren Stufe der Nabe 56 angeordnet. Die Nabe 56 bildete eine untere Kolbenlaufbahn des Betätigungskolbens 32. Ferner ist der Betätigungskolben 32 in axialer Richtung gegenüber der Rotationsachse 35 des Lamellenpakets 16 zwischen der Deckelschale 55 und den Lamellen 17 des Lamellenpakets 16 angeordnet. Der Gegenhalter 33 ist auf einer dem Betätigungskolben 32 abgewandten Seite der Lamellen 17 des Lamellenpakets 16 angeordnet. Der Gegenhalter 33 ist zu einem axialen Abstützen des Lamellenpakets 16 gegen einen Druck des Betätigungskolbens 32 vorgesehen. Bei einer Betätigung der Lamellenkupplung 13 wird der Betätigungskolben 32 in axialer Richtung gegen die Lamellen 17 des Lamellenpakets 16 gedrückt, sodass die Lamellen 17 des Lamellenpakets 16 und die als Außenlamellen ausgebildeten Lamellen 39 des zweiten Lamellenpakets 38 reibschlüssig verbunden werden. Der Gegenhalter 33 dient dabei dazu, eine der Kraft des Betätigungskolbens 32 entgegengerichtete Kraft aufzubringen, welche ein Wegdrücken und/oder ein Ausweichen der Lamellen 17, 39 verhindern soll. Durch den Aufbau weist die Lamellenkupplung 13 einen vorteilhaft geringen Durchmesser auf. Ferner weist die Lamellenkupplung 13 eine Zwischenlage 43 auf. Die Zwischenlage 43 ist zwischen dem Lamellenpaket 16 und dem Betätigungskolben 32 und/oder dem Gegenhalter 33 angeordnet. Die Zwischenlage 43 ist zumindest zwischen dem Lamellenpaket 16 und dem Gegenhalter 33 angeordnet. Die Zwischenlage 43 ist von einer Stahlfolie gebildet. Die Zwischenlage 43 weist eine Stärke von 0,2 mm auf. Die Zwischenlage 43 ist zu einem Ausgleich einer ungleichmäßigen Einspannsituation vorgesehen (Figur 4).

Des Weiteren weist der Betätigungskolben 32 einen Druckpunkt 34 auf. Der Druckpunkt 34 des Betätigungskolbens 32 definiert dabei einen Punkt, in welchem der Betätigungskolben 32 die Lamellen 17 des Lamellenpakets 16 bei einer Betätigung der Lamellenkupplung 13 kontaktiert. Der Druckpunkt 34 des Betätigungskolbens 32 ist ringförmig ausgebildet. Der Gegenhalter 33 weist ferner einen Gegendruckpunkt 36 auf. Der Gegendruckpunkt 36 des Gegenhalters 33 definiert dabei einen Punkt, in welchem der Gegenhalter 33 die Lamellen 17 des Lamellenpakets 16 bei einer Betätigung der Lamellenkupplung 13 kontaktiert. Der Gegendruckpunkt 36 des Gegenhalters 33 ist ringförmig ausgebildet. Der Druckpunkt 34 des Betätigungskolbens 32 weist einen geringeren radialen Abstand zu der Rotationachse 35 des Lamellenpakets 16 auf als der Gegendruckpunkt 36 des Gegenhalters 33. Der Druckpunkt 34 des Betätigungskolbens 32 und der Gegendruckpunkt 36 des Gegenhalters 33 sind radial in einem Nahbereich eines mittleren Radius 37 des Reibbereichs 25 der Lamellen 17 angeordnet. Ein radialer Abstand des Druckpunkts 34 des Betätigungskolbens 32 zu der Rotationachse 35 des Lamellenpakets 16 und ein radialer Abstand des Gegendruckpunkts 36 des Gegenhalters 33 zu der Rotationachse 35 des Lamellenpakets 16 entspricht demnach im Wesentlichen einem Wert des mittleren Radius 37 des Reibbereichs 25 der Lamellen 17 des Lamellenpakets 16, also dem radialen Abstand des mittleren Radius 37 zu der Rotationachse 35 des Lamellenpakets 16. Ein relativ zu der Rotationachse 35 des Lamellenpakets 16 radialer Abstand des Druckpunkts 34 und des Gegendruckpunkts 36 zu dem mittleren Radius 37 beträgt maximal 2 mm. Ferner weist der Druckpunkt 34 des Betätigungskolbens 32 einen geringeren radialen Abstand zu der Rotationachse 35 des Lamellenpakets 16 auf als der mittlere Radius 37 des Reibbereichs 25 der Lamellen 17. Der Gegendruckpunkt 36 des Gegenhalters 33 weist einen größeren radialen Abstand zu der Rotationachse 35 des Lamellenpakets 16 auf als der mittlere Radius 37 des Reibbereichs 25 der Lamellen 17. Die Lamellen 39 des zweiten Lamellenpakets 38 weisen ebenfalls einen Reibbereich mit einer Reibfläche auf. Der Druckpunkt 34 des Betätigungskolbens 32 und der Gegendruckpunkt 36 des Gegenhalters 33 weisen jeweils einen größeren radialen Abstand zu einer Rotationachse 35 des zweiten Lamellenpakets 38 auf als ein mittlerer Radius 40 des Reibbereichs der Lamellen 39 des zweiten Lamellenpakets 38. Das Lamellenpaket 16 und das zweite Lamellenpaket 38 weisen dieselbe Rotationachse 35 auf (Figur 4).

Des Weiteren weist der Innenlamellenträger 14 zumindest einen sich im Wesentlichen radial erstreckenden Ölkanal 28 auf. Der Innenlamellenträger 14 weist mehrere Ölkanäle 28 auf. Die Ölkänale 28 sind zu einer Ölführung vorgesehen ist. Die Ölkänale 28 sind dazu vorgesehen, Öl, insbesondere Getriebeöl, für eine Kühlung und Schmierung der Lamellenkupplung 13 an der Lamellenkupplung 13 bereitzustellen. Die Ölkänale 28 dienen dazu, die Lamellenkupplung 13 radial von innen nach außen mit Öl zu versorgen. Der Ölstrom erfolgt dabei über eine Zuleitung durch ein Nabeninneres. Die Ölkanäle 28 sind in die Nabe 56 eingebracht. Die Ölkänale 28 führen an die radial innere Stufe der Nabe 56. Die Ölkänale 28 erstrecken sich jeweils von einer inneren Aufnahme der Nabe 15 durch die Nabe 56 an die radial innere Stufe. Die Ölkänale 28 sind in Umfangsrichtung gleichmäßig verteilt. Die innere Aufnahme der Nabe 56 ist von einer Achsaufnahme gebildet. Die innere Aufnahme der Nabe 56 ist im Bereich der Rotationsachse 35 des Lamellenpakets 16 angeordnet. Die innere Aufnahme der Nabe 56 ist gegenüber der Rotationsachse 35 rotationssymmetrisch ausgebildet (Figur 2).

Ferner weisen die Distanzelemente 19 zumindest eine Ölführungstasche 20 auf. Die Distanzelemente 19 weisen mehrere Ölführungstaschen 20 auf. Die Distanzelemente 19 weisen beispielhaft jeweils sechs Ölführungstaschen 20 auf. Die Ölführungstaschen 20 erstrecken sich jeweils von dem Innenlamellenträger 14 radial nach außen. Die Ölführungstaschen 20 erstrecken sich jeweils von dem Innenlamellenträger 14 radial nach außen über die durchgehenden Ringe 18 der Lamellen 17 hinweg. Die Ölführungstaschen 20 sind jeweils dazu vorgesehen, Öl an den durchgehenden Ringen 18 der Lamellen 17 vorbeizuführen, um einen radialen Ölfluss zu gewährleisten. Die Ölführungstaschen 20 sind jeweils von Materialaussparungen gebildet, welche sich von einer Innenkontur radial nach außen erstrecken. Die Ölführungstaschen 20 sind jeweils von in axialer Richtung durchgehenden Materialaussparungen gebildet. Die Ölführungstaschen 20 sind in Umfangsrichtung um die Rotationsachse 35 des Lamellenpakets 16 gleichmäßig verteilt. Die Ölführungstaschen 20 sind jeweils direkt neben einem der Befestigungsringe 41 angeordnet (Figur 3, 7).

Die Lamellen 17 des Lamellenpakets 16 weisen ferner jeweils in dem durchgehenden Ring 18 zumindest eine Ölführungstasche 21 auf. Die Lamellen 17 des Lamellenpakets 16 weisen jeweils in dem durchgehenden Ring 18 mehrere Ölführungstaschen 21 auf. Die Ölführungstaschen 21 sind mit den Ölführungstaschen 20 der Distanzelemente 19 verbunden. Die Ölführungstaschen 21 der Lamellen 17 erstrecken sich im Wesentlichen axial. Ferner sind die Ölführungstaschen 21 der Lamellen 17 an der Innenkontur der Lamellen 17 angeordnet. Die Ölführungstaschen 21 der Lamellen 17 sind radial innerhalb des durchgehenden Rings 18 angeordnet. Die Ölführungstaschen 21 der Lamellen 17 sind ferner jeweils außerhalb der Befestigungsbereiche 29 des Klemmbereichs 22 und außerhalb eines Funktionsbereichs des Federbereichs 23, also außerhalb eines Bereichs der federnden Stege 24, angeordnet. Die Ölführungstaschen 21 der Lamellen 17 sind in Umfangsrichtung jeweils direkt neben einem der Befestigungsbereiche 29 des Klemmbereichs 22 angeordnet. Die Ölführungstaschen 21 der Lamellen 17 sind dazu vorgesehen, Öl, welches von dem über die Ölkanäle 28 des Innenlamellenträgers 14 radial nach außen geführt wird, in die Ölführungstaschen 20 der Distanzelemente 19 zu führen, um einen radialen Ölfluss 58 zu ermöglichen. Die Ölführungstaschen 21 sind in Umfangsrichtung um die Rotationsachse 35 des Lamellenpakets 16 gleichmäßig verteilt. Eine Umfangsposition der Ölführungstaschen 21 der Lamellen 17 entspricht im Wesentlichen einer Umfangsposition der Ölkanäle 28 des Innenlamellenträgers 14. Ferner entspricht eine Umfangsposition der Ölführungstaschen 21 der Lamellen 17 im Wesentlichen der Umfangsposition der Ölführungstaschen 20 der Distanzelemente 19. Dadurch sind die Ölkanäle 28 mit den Ölführungstaschen 21 der Lamellen 17 verbunden und die Ölführungstaschen 21 der Lamellen 17 mit den Ölführungstaschen 20 der Distanzelemente 19. Über die Ölkanäle 28 des Innenlamellenträgers 14 kann dadurch Öl direkt in die Ölführungstaschen 21 der Lamellen 17 und von dort in die Ölführungstaschen 20 der Distanzelemente 19 fließen. Die Umfangsposition der Lamellen 17 und der Distanzelemente 19 wird über die Befestigungsposition der Lamellen 17 und der Distanzelemente 19 sichergestellt (Figur 3, 6).

Des Weiteren bilden die Lamellen 17 des Lamellenpakets 16 jeweils zwischen den federnden Stegen 24 des Federbereichs 23 offene Ölbereiche 27 aus. Die Lamellen 17 weisen daher beispielhaft sechs offene Ölbereiche 27 auf. Die offenen Ölbereiche 27 sind jeweils mit den Ölführungstaschen 20 der Distanzelemente 19 verbunden. Die offenen Ölbereiche 27 erstrecken sich jeweils ausgehend von dem durchgehenden Ring 19 hin zu dem Reibbereich 25 der jeweiligen Lamelle 17. Die offenen Ölbereiche 27 dienen zu einer großflächigen Verteilung des Öls, um in dem Reibbereich 25 einen vorteilhaft gleichmäßigen und homogenen Ölfilm zu erreichen. Das Öl wird den offenen Ölbereichen 27 über die Ölkanäle 28, über die Ölführungstaschen 21 der Lamellen 17 und über die Ölführungstaschen 20 der Distanzelemente 19 zugeführt. Ein Ölfluss 58 des Öls erfolgt daher von einem Nabeninneren in die Ölkanäle 28 des Innenlamellenträgers 14. Von den Ölkanälen 28 aus erfolgt der Ölfluss 58 direkt in die Ölführungstaschen 21 der Lamellen 17, von wo aus das Öl axial in die Ölführungstaschen 20 der Distanzelemente 19 fließt. Über die Ölführungstaschen 20 der Distanzelemente 19 geht der Ölfluss 58 weiter in die offenen Ölbereiche 27, von wo aus das Öl in die Reibbereiche 25 der Lamellen 17 gelangt (Figur 3, 6).

Die E-Maschine 12 des Hybrid-Triebkopfs 10 ist teilweise radial außerhalb der Lamellenkupplung 13 angeordnet. Die Lamellenkupplung 13 ist radial innerhalb der E-Maschine 12 angeordnet. Die E-Maschine 12 weist einen Rotor 30 auf. Die Lamellenkupplung 13 ist innerhalb des Rotors 30 der E-Maschine 12 angeordnet. Dadurch kann eine besonders kompakte Anordnung erreicht werden. Es kann insbesondere ein Durchmesser des Hybrid-Triebkopfs 10 gering gehalten werden. Insbesondere kann der Hybrid-Triebkopf 10 dadurch vorteilhaft axial kompakt ausgeführt werden. Durch die kompakte Anordnung der Lamellenkupplung 13 kann die E-Maschine 12 radial um die Lamellenkupplung 13 angeordnet werden.

### Bezugszeichenliste

- 10: Hybrid-Triebkopf
- 11: Kraftfahrzeug
- 12: E-Maschine
- 13: Lamellenkupplung
- 14: Innenlamellenträger
- 15: Außenlamellenträger
- 16: Lamellenpaket
- 17: Lamelle
- 18: Ring
- 19: Distanzelement
- 20: Ölführungstasche
- 21: Ölführungstasche
- 22: Klemmbereich
- 23: Federbereich
- 24: Steg
- 25: Reibbereich
- 26: Reibfläche
- 27: Ölbereich
- 28: Ölkanal
- 29: Befestigungsbereich
- 30: Rotor
- 31: Kraftfahrzeuggetriebe
- 32: Betätigungskolben
- 33: Gegenhalter
- 34: Druckpunkt
- 35: Rotationsachse
- 36: Gegendruckpunkt
- 37: Radius
- 38: Lamellenpaket
- 39: Lamelle
- 40: Radius
- 41: Befestigungsring
- 42: Steg
- 43: Zwischenlage
- 44: Antriebsstrang
- 45: Antriebsrad
- 46: Antriebseinheit
- 47: Kurbelwelle
- 48: Automatikgetriebe
- 49: Wandlereinheit
- 50: Pumpenrad
- 51: Turbinenrad
- 52: Leitrad
- 53: Wandlerdeckel
- 54: Flexplate
- 55: Deckelschale
- 56: Nabe
- 57: Schraube
- 58: Ölfluss

- R_{ges}: Lamellenradiusbereich
- R_{K}: Radiusbereich
- R_{F}: Radiusbereich
- R_{R}: Radiusbereich

## Patentansprüche

1. Lamellenkupplung für ein Kraftfahrzeug (11), mit einem Innenlamellenträger (14), mit einem Außenlamellenträger (15) und mit zumindest einem sowohl drehfest als auch in einer axialen Richtung fest an dem Innenlamellenträger (14) oder an dem Außenlamellenträger (15) angebundenen Lamellenpaket (16), welches zumindest zwei Lamellen (17) umfasst,
wobei zumindest ein als Zwischenblech ausgebildetes, zwischen den zumindest zwei Lamellen (17) axial unbeweglich und unverformbar angeordnetes Distanzelement (19) vorgesehen ist, welches zu einer gleichmäßigen Beabstandung der Lamellen (17) vorgesehen ist,
**dadurch gekennzeichnet, dass**
das zumindest eine Distanzelement (19) zumindest eine Ölführungstasche (20) aufweist, welche sich von dem Innenlamellenträger (14) radial nach außen erstreckt.

2. Lamellenkupplung nach Anspruch 1,
**dadurch gekennzeichnet, dass**
die zumindest zwei Lamellen (17) und das zumindest eine Distanzelement (19) an dem Innenlamellenträger (14) angeordnet sind.

3. Lamellenkupplung nach Anspruch 1 oder 2,
**dadurch gekennzeichnet, dass**
das zumindest eine Distanzelement (19) in zumindest einem wesentlichen Teilbereich flach geschliffen ist.

4. Lamellenkupplung nach einem der vorhergehenden Ansprüche,
**dadurch gekennzeichnet, dass**
das Distanzelement (19) eben ausgebildet ist.

5. Lamellenkupplung nach einem der vorhergehenden Ansprüche,
**dadurch gekennzeichnet, dass**
das zumindest eine Distanzelement (19) eine ringförmige Grundform aufweist.

6. Lamellenkupplung nach einem der vorhergehenden Ansprüche,
**dadurch gekennzeichnet, dass**
das zumindest eine Distanzelement (19) mehrere Befestigungsringe (41) sowie mehrere die Befestigungsringe (41) verbindende, S-förmige Stege (42) aufweist.

7. Lamellenkupplung nach Anspruch 6,
**dadurch gekennzeichnet, dass**
sich die S-förmigen Stege (42) jeweils von einem ersten Befestigungsring (41) von einer radialen Innenseite des Distanzelements (19) zu einem benachbarten zweiten Befestigungsring (41) zu einer radialen Außenseite des Distanzelements (19) hin erstrecken.

8. Lamellenkupplung zumindest nach Anspruch 6,
**dadurch gekennzeichnet, dass**
die Befestigungsringe (41) des zumindest einen Distanzelements (19) auf einem gemeinsamen Radius in Umfangsrichtung gleichmäßig verteilt angeordnet sind.

9. Lamellenkupplung nach einem der vorhergehenden Ansprüche,
**gekennzeichnet durch**
zumindest einen Betätigungskolben (32) zu einer Betätigung der Lamellenkupplung (13), zumindest einen Gegenhalter (33) zu einem axialen Abstützen des Lamellenpakets (16) gegen einen Druck des Betätigungskolbens (32) und zumindest eine Zwischenlage (43), welche zwischen dem Lamellenpaket (16) und dem Betätigungskolben (32) und/oder dem Gegenhalter (33) angeordnet ist und zu einem Ausgleich einer ungleichmäßigen Einspannsituation vorgesehen ist.

10. Lamellenkupplung nach Anspruch 9,
**dadurch gekennzeichnet, dass**
eine geometrische Kontur der Zwischenlage (43) einer geometrischen Kontur des Befestigungsringes (41) des Distanzelements (19) entspricht.

11. Lamellenkupplung nach Anspruch 9,
**dadurch gekennzeichnet, dass**
die Zwischenlage (43) einstückig mit dem Gegenhalter (33) ausgebildet ist.

12. Hybrid-Triebkopf mit zumindest einer E-Maschine (12) und mit zumindest einer Lamellenkupplung (13) nach einem der vorhergehenden Ansprüche,
**dadurch gekennzeichnet, dass**
die zumindest eine Lamellenkupplung (13) radial innerhalb der E-Maschine (12) angeordnet ist.

## Claims

1. Multi-plate clutch for a motor vehicle (11), with an inner plate carrier (14), with an outer plate carrier (15) and with at least one plate stack (16), which is tied to the inner plate carrier (14) or to the outer plate carrier (15) both non-rotatably and fixed in an axial direction and which comprises at least two plates (17),
wherein there is provided at least one spacer element (19), which is designed as an intermediate shim, arranged in an axially immovable and non-deformable manner between the at least two plates (17) and provided for a uniform distancing of the plates (17),
**characterised in that**
the at least one spacer element (19) has at least one oil guidance pocket (20) extending radially outwards from the inner plate carrier (14).

2. Multi-plate clutch according to claim 1,
**characterised in that**
the at least two plates (17) and the at least one spacer element (19) are located at the inner plate carrier (14).

3. Multi-plate clutch according to claim 1 or 2,
**characterised in that**
the at least one spacer element (19) is ground flat at least in a substantial sub-region.

4. Multi-plate clutch according to any of the preceding claims,
**characterised in that**
the spacer element (19) is designed to be flat.

5. Multi-plate clutch according to any of the preceding claims,
**characterised in that**
the at least one spacer element (19) has an annular basic shape.

6. Multi-plate clutch according to any of the preceding claims,
**characterised in that**
the at least one spacer element (19) has several fastening rings (41) and several S-shaped webs (42) connecting the fastening rings (41).

7. Multi-plate clutch according to claim 6,
**characterised in that**
each of the S-shaped webs (42) extends from a first fastening ring (41) from a radial inside of the spacer element (19) to an adjacent second fastening ring (41) to a radial outside of the spacer element (19).

8. Multi-plate clutch according to at least claim 6,
**characterised in that**
the fastening rings (41) of the at least one spacer element (19) are equally distributed on a common radius in the circumferential direction.

9. Multi-plate clutch according to any of the preceding claims,
**characterised by**
at least one actuating piston (32) for an actuation of the multi-plate clutch (13), at least one counterhold (33) for an axial support of the plate stack (16) against a pressure of the actuating piston (32) and at least one intermediate layer (43), which is located between the plate stack (16) and the actuating piston (32) and/or the counterhold (33) and is provided for a compensation of an irregular clamping situation.

10. Multi-plate clutch according to claim 9,
**characterised in that**
a geometrical contour of the intermediate layer (43) corresponds to a geometrical contour of the fastening ring (41) of the spacer element (19).

11. Multi-plate clutch according to claim 9,
**characterised in that**
the intermediate layer (43) is designed in one piece with the counterhold (33).

12. Hybrid drive head with at least one electric machine (12) and at least one multi-plate clutch (13) according to any of the preceding claims,
**characterised in that**
the at least one multi-plate clutch (13) is located radially inside the electric machine (12).

## Revendications

1. Embrayage multidisques pour un véhicule à moteur (11), comprenant un support de disque intérieur (14), un support de disque extérieur (15) et comprenant au moins un ensemble de disques (16) relié tant solidaire en rotation que dans une direction axiale, à demeure au support de disque intérieur (14) ou au support de disque extérieur (15), ledit ensemble de disques comprenant au moins deux disques (17),
au moins un élément d'écartement (19) conçu sous la forme d'une tôle intermédiaire entre lesdits deux disques (17) disposé axialement de manière à être immobile et à ne pas se déformer, servant à former un écartement régulier entre les lamelles (17),
**caractérisé en ce que**
ledit élément d'écartement (19) comportant au moins une poche de guidage d'huile (20) qui s'étend radialement à partir du support de lamelle intérieur (14) jusqu'à l'extérieur.

2. Embrayage multidisques selon la revendication 1, **caractérisé en ce que** lesdits deux disques (17) et ledit élément d'écartement (19) sont disposés sur le support de disque intérieur (14).

3. Embrayage multidisques selon la revendication 1 ou la revendication 2, **caractérisé en ce que** ledit élément d'écartement (19) est meulé pour être plat à au moins un endroit.

4. Embrayage multidisques selon l'une quelconque des revendications précédentes, **caractérisé en ce que** l'élément d'écartement (19) est conçu pour être plane.

5. Embrayage multidisques selon l'une quelconque des revendications précédentes, **caractérisé en ce que** ledit élément d'écartement (19) comporte une forme de base annulaire.

6. Embrayage multidisques selon l'une quelconque des revendications précédentes, **caractérisé en ce que** ledit élément d'écartement (19) comporte plusieurs anneaux de fixation (41) ainsi que plusieurs éléments de liaison (42) en forme de S reliant les anneaux de fixation (41).

7. Embrayage multidisques selon la revendication 6, **caractérisé en ce que** les éléments de liaison (42) en forme de S s'étendent respectivement depuis un premier anneau de fixation (41) d'un côté intérieur radial de l'élément d'écartement (19) jusqu'à un second anneau de fixation adjacent (41) à un côté extérieur radial de l'élément d'écartement (19).

8. Embrayage multidisques au moins selon la revendication 6, **caractérisé en ce que** les anneaux de fixation (41) dudit élément d'écartement (19) sont répartis à intervalles réguliers sur un rayon commun dans la direction de la périphérie.

9. Embrayage multidisques selon l'une quelconque des revendications précédentes, **caractérisé par** au moins un piston d'actionnement (32) qui sert à l'actionnement de l'embrayage à disques (13), au moins un bras de support (33) sert à un appui radial de l'ensemble de disques (16) contre une pression du piston d'actionnement (32) et au moins un intercalaire (43) qui est disposé entre l'ensemble de disques (16) et le piston d'actionnement (32) et/ou le bras de support (33) et sert à rééquilibrer une situation de serrage.

10. Embrayage multidisques selon la revendication 9, **caractérisé en ce qu'**un contour géométrique de l'intercalaire correspond à un contour géométrique de l'anneau de fixation (41) de l'élément d'écartement.

11. Embrayage multidisques selon la revendication 9, **caractérisé en ce que** l'intercalaire (43) est conçu d'un seul tenant avec le bras de support (33).

12. Automotrice hybride comprenant au moins un moteur électrique (12) et comprenant au moins un embrayage à disques (13) selon l'une quelconque des revendications précédentes, **caractérisée en ce que** ledit embrayage à disques (13) est disposé radialement à l'intérieur du moteur électrique (12).
